Europäisches Patentamt

European Patent Office

Office européen des brevets

(11) Veröffentlichungsnummer: **0 189 468**
**B1**

(12) **EUROPÄISCHE PATENTSCHRIFT**

(45) Veröffentlichungstag der Patentschrift :
28.09.88

(21) Anmeldenummer : 85903817.6

(22) Anmeldetag : 17.07.85

(86) Internationale Anmeldenummer :
PCT/EP 85/00352

(87) Internationale Veröffentlichungsnummer :
WO/8600568 (30.01.86 Gazette 86/03)

(51) Int. Cl.⁴ : **B 30 B 15/30**, B 29 C 47/10

(54) VORRICHTUNG ZUM EINBRINGEN VON KONTINUIERLICH ZUGEFÜHRTEN, ZERKLEINERTEN FESTSTOFFEN IN EINE VERARBEITUNGSMASCHINE.

(30) Priorität : 17.07.84 DE 3426317

(43) Veröffentlichungstag der Anmeldung :
06.08.86 Patentblatt 86/32

(45) Bekanntmachung des Hinweises auf die Patenterteilung : 28.09.88 Patentblatt 88/39

(84) Benannte Vertragsstaaten :
BE CH DE FR GB IT LI NL

(56) Entgegenhaltungen :
DE-A- 2 450 374
DE-B- 2 359 390
FR-A- 1 473 162
US-A- 3 920 229
US-A- 3 947 169
US-A- 4 110 844

(73) Patentinhaber : **Werner & Pfleiderer GmbH**
**Theodorstrasse 10 Postfach 30 12 20**
**D-7000 Stuttgart 30 (DE)**

(72) Erfinder : **STADE, Kurt, H.**
**Rehhaagstrasse 5**
**CH-4410 Liesthal (CH)**
Erfinder : **GLAWION, Erwin**
**Anne-Frank-Str. 21**
**D-8754 Grossostheim 2 (DE)**

(74) Vertreter : **Bardehle, Heinz, Dipl.-Ing. et al**
**Patent- und Rechtsanwälte Bardehle-Pagenberg-Dost-Altenburg-Frohwitter und Partner Galileiplatz 1**
**Postfach 86 06 20**
**D-8000 München 86 (DE)**

## Beschreibung

Die Erfindung bezieht sich auf eine Vorrichtung zum Einbringen von zerkleinerten Feststoffen in Form von Pulver, Granulat, Faserstücken und dergleichen in eine Verarbeitungsmaschine, insbesondere eine Schneckenpresse, mit einem Zuführtrichter und mindestens einer den Zuführtrichter axial durchsetzenden Zuführschnecke und einem mit Abstand und im wesentlichen koaxial zur Trichterwand angeordneten Einsatz, der die Zuführschnecke bzw. Zuführschnecken berührungsfrei umgibt.

Eine derartige Vorrichtung ist aus der US-PS 2 933 175 bekannt. Bei dieser Vorrichtung umgibt der Einsatz als koaxial zur Trichterwand verlaufendes Rohr, das mit Längsschlitzen versehen ist, die Zuführschnecke, um einem in den Trichter geführten Granulat den Zutritt zu dem Inneren des Rohrs zu ermöglichen, von wo das Granulat dann mittels der Zuführschnecke aus dem Trichter ausgestoßen wird.

Wenn es sich nun darum handelt, die zerkleinerten Feststoffe in genauer, gleichbleibender Dosierung einer Verarbeitungsmaschine zuzuführen, wie dies beispielsweise bei Compoundiermaschinen der Fall ist, dann ist die Zuführung aus einem im Zuführtrichter befindlichen Füllstand ungeeignet, da sich bei dieser Betriebsweise sich ständig ändernde Durchsätze ergeben. Dies führt zu Ungleichmäßigkeiten in dem in der Verarbeitungsmaschine zu erzeugenden Material und kann sogar eine Überfütterung der Verarbeitungsmaschine und damit deren Überlastung zur Folge haben.

Im Zusammenhang mit der kontinuierlichen, gleichmäßigen Zuführung von zerkleinerten Feststoffen ist es weiterhin aus der Zeitschrift « Plastverarbeiter », Oktober 1980, Seiten 569-572, bekanntgeworden, die zerkleinerten Feststoffe in einen Zuführtrichter mit zwei diesen axial durchsetzenden Zuführschnecken derart einrieseln zu lassen, daß die zerkleinerten Feststoffe als gleichmäßige Strömung ohne Ausbildung eines Füllstandes in dem Einfülltrichter abwärts gleiten, bis sie im Bereich von dessen Ende von den Zuführschnecken erfaßt werden und danach der Verarbeitungsmaschine zugeführt werden. Sofern es sich dabei um gleichmäßig rieselnde, zerkleinerte Feststoffe handelt, läßt sich mit einer solchen Vorrichtung eine kontinuierliche und gleichmäßige Zuführung der zerkleinerten Feststoffe erzielen.

Handelt es sich nun um die Verarbeitung von zerkleinerten Feststoffen, die zum Verklumpen bzw. Verfilzen oder Anbacken insbesondere an der Wandung des Zuführtrichters neigen, so ergeben sich jedoch Schwierigkeiten die Gleichmäßigkeit und Kontinuität der Zuführung mit Sicherheit zu gewährleisten. Insbesondere führt dabei das Anbacken zu einem Rückstau, bei dessen plötzlicher Auflösung die Verarbeitungsmaschine überlastet werden kann, abgesehen davon, daß hierdurch das herzustellende Produkt unerwünschte Ungleichmäßigkeiten hinsichtlich seiner Zusammensetzung aufweist.

Der Erfindung liegt die Aufgabe zugrunde, diese Schwierigkeiten zu vermeiden und das gleichmäßige, kontinuierliche Einbringen von zerkleinerten Feststoffen zu ermöglichen, die die erwähnten Eigenschaften aufweisen, durch die die Gleichmäßigkeit und Kontinuierlichkeit der Zuführung gestört werden kann. Erfindungsgemäß geschieht dies dadurch, daß der Einsatz trichterförmig ausgebildet und von einer oben aus dem Zuführtrichter herausragenden als Förderelement ausgebildeten Halterung gehalten ist, die außerhalb des Zuführtrichters mit einem Vibrator verbunden ist.

Durch die Kombination von Einsatz mit der als Förderelement ausgebildeten Halterung und an diese angebrachtem Vibrator wird erreicht, daß die verkleinerten Feststoffe über ein relativ leicht in Vibration zu versetzendes Organ, nämlich den Einsatz auf die Zuführschnecke zugeführt werden, wobei durch die Vibration dafür gesorgt wird, daß die Zuführschnecke die zerkleinerten Feststoffe aufnehmen muß, ohne daß diese die Tendenz entwickeln können, sich zusammenzuballen oder irgendwo anzubacken. Sind die zerkleinerten Feststoffe erst einmal von der Zuführschnecke bzw. den Zuführschnecken erfaßt, dann neigen die zerkleinerten Feststoffe nicht mehr dazu, im folgenden Bereich hinter den trichterförmigen Einsatz an den die Zuführschnecke umgebenden Wänden anzubacken. Dabei wirkt sich besonders günstig aus, wenn der freie Bereich unterhalb des trichterförmigen Einsatzes so kurz wie möglich gehalten wird.

Vorteilhaft wird der trichterförmige Einsatz so gestaltet, daß sich der Abstand zwischen Einfülltrichter und Einsatz in Förderrichtung erweitert. Hierdurch wird erreicht, daß irgendwelche Materialteilchen, die zwischen Einsatz und Zuführtrichter gelangen, in diesem Bereich sich zusammenballen können, dadurch die ständige Erweiterung des Abstandes zwischen Zuführtrichter und Einsatz der Bewegungsspielraum für derartige Materialteilchen ständig erweitert wird. Die Halterung läßt sich vorteilhaft auch als Förderrohr ausbilden.

In den Figuren ist ein Ausführungsbeispiel der Erfindung dargestellt. Es zeigen

Figur 1 die Vorrichtung im Schnitt von der Seite gesehen,

Figur 2 ein Ausschnitt aus der Anordnung gemäß Figur 1 unter Abwandlung des oberen Endes und der Gestaltung der Förderrinne.

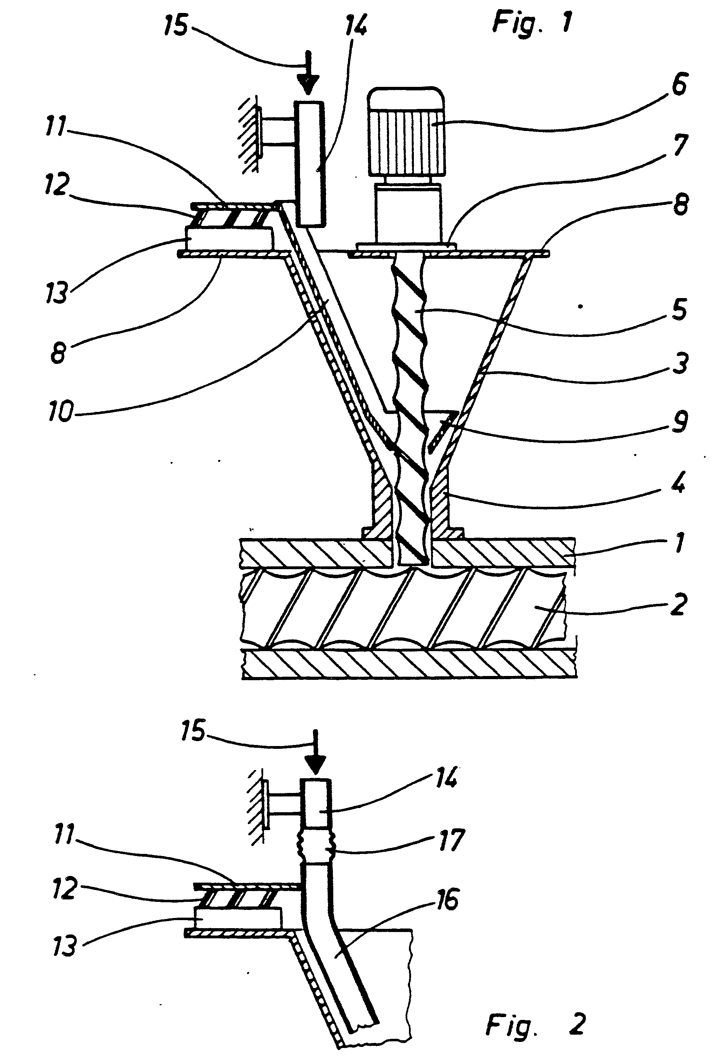

Die in der Figur 1 dargestellte Vorrichtung besteht aus dem Gehäuse 1, das die Schnecke 2 einer bekannten Schneckenpresse umgibt. Es kann sich dabei auch um eine Doppelschnecke handeln. In dieses Gehäuse 1 mündet das Ende des Zuführtrichters 3, der über den Rohrstützen 4 an den Innenraum des Gehäuses 1 angeschlossen ist. Koaxial zum Zuführtrichter 3 ist die Zuführschnecke 5 angeordnet, die bis in den Rohrstützen 4 hineinragt und ihr zugeführte zerkleinerte Feststoffe in den Innenraum des Gehäuses 1 transportiert, so daß diese zerkleinerten Feststoffe von der Schnecke 2 mitgenommen werden. Die Zuführschnecke 5 hängt an dem Antriebsmotor 6, der auf der Platte 7 montiert ist, die sich über den Deckel 8 des Zuführtrichters 3 gegen diesen abstützt.

Am unteren Ende des Zuführtrichters 3 ist koaxial und mit Abstand zu diesem der trichterförmige Einsatz 9 angeordnet, der nach oben offen ist und der von der Zuführschnecke 5 berührungsfrei durchsetzt wird. Der Einsatz 9 wird von der Förderrinne 10 gehalten, die an ihrem oberen Ende in den Tragarm 11 übergeht. Der Tragarm 11 ist an den Federbändern 12 befestigt, die in den Vibrator 13 hineinragen. Der Vibrator 13 ist wie der Antriebsmotor 6 auf dem Deckel 8 befestigt. Bei Erregung des Vibrators 13 versetzt dieser die Federbänder 12 in Schwingungen, die dementsprechend den Tragarm 11 und damit die Förderrinne 10 und mit ihr den Einsatz 9 in Vibration versetzen. Der Förderrinne 10 wird an ihrem oberen Ende über das Einfüllrohr 14 die zerkleinerten Feststoffe zugeführt, die von einer hier nicht dargestellten Zuführungseinrichtung in kontinuierlichem und gleichmäßigen Strom in das Zuführungsrohr 14 gelangen. Dieser Strom von zerkleinerten Feststoffen ist durch den Pfeil 15 angedeutet. Die zerkleinerten Feststoffe gelangen somit auf die Förderrinne 10 und über diese in den Einsatz 9, wo sie aufgrund der Vibration sich weder zusammenballen noch an irgendeiner Wandung anbacken können. Sie werden auf diese Weise am unteren Ende des Einsatzes der Zuführschnecke 5 zugeführt, die die zerkleinerten Feststoffe in gelockerter Form dann in den Innenraum der durch Gehäuse 1 und Schnecke 2 gebildeten Schneckenpresse führen.

Wie Figur 1 zeigt, weisen der Zuführtrichter 3 und der trichterförmige Einsatz 9 eine unterschiedliche Konizität auf, nämlich derart, daß sich in Förderrichtung der Abstand zwischen Zuführtrichter 3 und Einsatz 9 erweitert. Dies ermöglicht es einzelnen Feststoffteilchen, die zwischen Einsatz 9 und Zuführtrichter 3 gelangt sein können, aufgrund des zunehmenden Bewegungsspielraumes in den Bereich der Zuführschnecke 5 zu gelangen, ohne daß sie sich zusammenballen bzw. verklemmen können.

Bei der in der Figur 2 dargestellten Ausführungsform handelt es sich im wesentlichen um einen Ausschnitt aus Figur 1, und zwar im Bereich des oberen Endes der Förderrinne, die gemäß Figur 2 als Förderrohr 16 ausgebildet ist. Das Förderrohr 16 ist über den Balg 17, der eine Beweglichkeit zuläßt, mit dem Zuführungsrohr 14 verbunden. Diese Art der Verbindung hat den Vorteil, daß bei Verarbeitung von Pulver eine staubfreie Zuführung zum Einsatz 9 ermöglicht wird.

Das Förderrohr 16 ist ähnlich wie bei der Ausführungsform gemäß Figur 1 über den Tragarm 11 und die Federarme 12 mit dem Vibrator 13 verbunden, so daß es mittels des Vibrators 13 in Schwingungen versetzt werden kann, die sich dann in der Weise, wie im Zusammenhang mit Figur 1 beschrieben, auf den am Förderrohr 16 hängenden Einsatz 9 übertragen.

Der Einsatz 9 ist so angeordnet, daß er vom unteren Ende des Zuführtrichters 3 einen möglichst geringen Abstand einhält, wobei natürlich zu beachten ist, daß der Einsatz 9 selbst vom Zuführtrichter 3 einen Abstand einhalten muß. In der Praxis beträgt der Abstand des unteren Endes des Einsatzes 9 und des unteren Endes des Zuführtrichters 3 etwa 20 bis 40 mm.

Die vorstehend beschriebene Vorrichtung eignet sich besonders zur Förderung von Holzmehl, zu Kurzglas zermahlenen Glasfasern, gemahlenem Glimmer, Talkum und dergleichen.

## Patentansprüche

1. Vorrichtung zum Einbringen von zerkleinerten Feststoffen in Form von Pulver, Granulat, Faserstücken und dergleichen in eine Verarbeitungsmaschine, insbesondere eine Schneckenpresse, mit einem Zuführtrichter (3) und mindestens einer den Zuführtrichter axial durchsetzenden Zuführschnecke (5) und einem mit Abstand und im wesentlichen koaxial zur Trichterwand angeordneten Einsatz (9), der die Zuführschnecke (5) bzw. Zuführschnecken berührungsfrei umgibt, dadurch gekennzeichnet, daß der Einsatz (9) trichterförmig ausgebildet und von einer oben aus dem Zuführtrichter (3) herausragenden als Förderelement ausgebildeten Halterung (10) gehalten ist, die außerhalb des Zuführtrichters (3) mit einem Vibrator (13) verbunden ist.

2. Vorrichtung nach Anspruch 1, dadurch gekennzeichnet, daß der Abstand zwischen Zuführtrichter (3) und Einsatz (9) sich in Förderrichtung erweitert.

3. Vorrichtung nach Anspruch 1 oder 2, dadurch gekennzeichnet, daß die Halterung als Förderrohr (16) ausgebildet ist.

## Claims

1. An apparatus for introducing comminuted solid matter in the form of powder, granulated material, pieces of fibre and the like, into a processing machine, particularly a screw extruder, having a feed hopper (3) and at least one feed screw (5) extending axially through the feed hopper and an insert (9) which is disposed with spacing from and substantially coaxially to the hopper wall and surrounds the feed screw (5) or feed screws without contact, characterised in that the insert (9) is funnel-shaped in construction and is held by a holding device (10) which projects out of the feed hopper (3) at the top and is constructed in the form of a conveying element and which is connected, outside the feed hopper (3), to a vibrator (13).

2. An apparatus according to Claim 1, characterised in that the spacing between feed hopper (3) and insert (9) widens out in the conveying direction.

3. An apparatus according to Claim 1 or 2, characterised in that the holding device is constructed in the form of a conveying tube (16).

**Revendications**

1. Dispositif d'introduction de matières solides divisées sous forme de poudre, de granulats, de morceaux de fibres et similaires, dans une machine de transformation, notamment dans une extrudeuse, comportant une trémie de chargement (3) et au moins une vis d'alimentation (5) traversant axialement la trémie de chargement ainsi qu'un organe (9) disposé à une certaine distance de la paroi de la trémie et à peu près sur le même axe, lequel entoure la ou les vis d'alimentation (5) sans les toucher, caractérisé en ce que l'organe (9) est en forme de cône et est maintenu par une fixation (10) conçue comme un élément de transport, ressortant à la partie supérieure de la trémie de chargement (3), laquelle fixation est reliée à un vibreur (13) à l'extérieur de la trémie de chargement (3).

2. Dispositif selon la revendication 1, caractérisé en ce que la distance séparant la trémie de chargement (3) et l'organe (9) s'élargit dans le sens du transport.

3. Dispositif selon la revendication 1 ou 2, caractérisé en ce que la fixation a la forme d'un conduit de transport (16).

0 189 468

Fig. 1

Fig. 2